(19) Europäisches Patentamt
European Patent Office
Office européen des brevets

(11) Veröffentlichungsnummer: **0 354 501**
**A2**

(12) # EUROPÄISCHE PATENTANMELDUNG

(21) Anmeldenummer: **89114498.2**

(51) Int. Cl.4: **C08G 65/32 , C08G 59/50**

(22) Anmeldetag: **05.08.89**

(30) Priorität: **10.08.88 DE 3827119**

(43) Veröffentlichungstag der Anmeldung:
**14.02.90 Patentblatt 90/07**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Schoenleben, Willibald, Dr.**
**Blumenthalstrasse 41**
**D-6900 Heidelberg(DE)**
Erfinder: **Mueller, Herbert Dr.**
**Carostrasse 53**
**D-6710 Frankenthal(DE)**

(54) **Amino-mono-oder-di[(poly-n-butoxy)-n-butylamino]-(poly-n-butoxy)-n-butyl-amine.**

(57) Amino-mono- oder -di[(poly-n-butoxy)-n-butylamino]-(poly-n-butoxy)-n-butylamine der allgemeinen Formel I
$H_2N\text{-}[(CH_2CH_2CH_2CH_2O)_x\text{-}(CH_2)_4\text{-}NH]_y\text{-}(CH_2CH_2CH_2CH_2O)_x\text{-}(CH_2)_4\text{-}NH_2$ (I),
in der x 1 bis 150 und y 1 oder 2 bedeuten, sowie ein Verfahren zur Herstellung dieser Verbindungen, in dem man Hydroxy-(poly-n-butoxy)-butanole der allgemeinen Formel II
$HO\text{-}(CH_2CH_2CH_2CH_2O)_x\text{-}(CH_2)_4\text{-}OH$ (II),
in der x 1 bis 150 bedeutet, mit 1.01 bis 300 Moläquivalenten Ammoniak pro Hydroxygruppe in Gegenwart eines Hydrier-Dehydrierkatalysators und Wasserstoff bei Temperaturen von 150 bis 300 °C und Drücken von 20 bis 400 bar umsetzt.

EP 0 354 501 A2

## Amino-mono- oder -di[(poly-n-butoxy)-n-butylamino]-(poly-n-butoxy)-n-butylamine

Die vorliegende Erfindung betrifft neue Amino-mono- oder -di[(poly-n-butoxy)-n-butylamino]-(poly-n-butoxy)-n-butylamine und ein Verfahren zu deren Herstellung.

Aus der US-A-3 824 197, US-A-3 824 198, US-A-3 824 219 und US-A-3 824 220 sind Umsetzungen von dikationischen Polymeren, aus der Polymerisation von Tetrahydrofuran, mit wäßriger Ammoniaklösung und mit flüssigem Ammoniak bei tiefen Temperaturen (-70 °C) bekannt.

Weiterhin ist aus DE-A-15 95 274 bekannt, daß man das $\alpha,\omega$-Dichlorpolyalkylenoxid, hergestellt aus Tetrahydrofuran, Thionylchlorid und $SbCl_5$, mit flüssigem Ammoniak in einem Autoklaven bei 120 °C zum entsprechenden $\alpha,\omega$-Diaminopolyalkylenoxid mit annähernd gleichem Durchschnittsmolekulargewicht umsetzen kann.

Aus US-A-4 181 682 ist ferner bekannt, daß man mit Katalysatoren zur reduktiven Aminierung die primären Alkoholfunktionen in $\alpha,\omega$-Polybutandiol mit Ammoniak nicht umgesetzen kann. Deshalb werden die primären Alkoholfunktionen mit Propylenoxid in sekundäre überführt und diese dann aminiert.

Der vorliegenden Erfindung lag nun die Aufgabe zugrunde, neue Polymere auf der Basis von Tetrahydrofuran zu finden, die primäre und sekundäre Aminogruppen enthalten.

Demgemäß wurden neue Amino-mono- oder -di[(poly-n-butoxy)-n-butylamino]-(poly-n-butoxy)-n-butylamine der allgemeinen Formel I

$H_2N\text{-}[(CH_2CH_2CH_2CH_2O)_x\text{-}(CH_2)_4\text{-}NH]_y\text{-}(CH_2CH_2CH_2CH_2O)_x\text{-}(CH_2)_4\text{-}NH_2$ (I),

in der x 1 bis 150 und y 1 oder 2 bedeuten, gefunden, sowie ein Verfahren zur Herstellung dieser Verbindungen, welches dadurch gekennzeichnet ist, daß man Hydroxy-(poly-n-butoxy)-butanole der allgemeinen Formel II

$HO\text{-}(CH_2CH_2CH_2CH_2O)_x\text{-}(CH_2)_4\text{-}OH$ (II),

in der x 1 bis 150 bedeutet, mit 1,01 bis 300 Moläquivalenten Ammoniak pro Hydroxygruppe in Gegenwart eines Hydrier-/Dehydrierkatalysators und Wasserstoff bei Temperaturen von 150 bis 300 °C und Drücken von 20 bis 400 bar umsetzt.

Der Index x in den Formeln I und II bedeutet 1 bis 150, vorzugsweise 3 bis 50, besonders bevorzugt 5 bis 35. Der Index y in Formel I bedeutet 1 oder 2, vorzugsweise 1.

Die Amino-mono- oder -di[(poly-n-butoxy)-n-butylamino]-(poly-n-butoxy)-n-butylamine der Formel I sind nach folgender Methode erhältlich:

Die Umsetzung erfolgt durch Kontakt eines Gemisches aus Hydroxy-(poly-n-butoxy)-butanol II, Ammoniak, Wasserstoff und einer katalytischen Menge eines Hydrier-/Dehydrierkatalysators nach folgendem Reaktionsschema:

$$HO-(CH_2CH_2CH_2CH_2O)_x-(CH_2)_4-OH \quad (II) \quad \xrightarrow{+NH_3}$$

$$H_2N-[(CH_2CH_2CH_2CH_2O)_x-(CH_2)_4-NH]_y-(CH_2CH_2CH_2CH_2O)_x-(CH_2)_4-NH_2 \quad (I)$$

Bei dieser Reaktion war das primäre Diamin von II als Reaktionsprodukt, insbesondere bei größeren Ammoniaküberschüssen zu erwarten. Überraschenderweise entsteht unter den Reaktionsbedingungen ein Gemisch, das zum überwiegenden Teil bzw. fast ausschließlich aus den Verbindungen I mit y = 1 und 2 besteht. Untergeordnet entstehen z.T. Verbindungen analog I mit y = 0, 3, 4, 5, 6 usw.

Die Reaktion wird in der Flüssigphase diskontinuierlich oder vorzugsweise kontinuierlich bei 150 bis 300 °C und 20 bis 400 bar durchgeführt.

Das Reaktionsgemisch enthält Ammoniak und Diol im Molverhältnis von 2,02:1 bis 600:1, vorzugsweise 10:1 bis 400:1, besonders bevorzugt 20:1 bis 200:1.

Die Hydroxy-(poly-n-butoxy)-butanole und ihre Herstellung sind z.T. aus der Angew. Chem. 72 (1960), 927 bekannt.-

Das bei der Aminierung sich bildende Reaktionswasser kann während der Reaktion im Gemisch verbleiben. Der Wasserstoffpartialdruck während der Umsetzung liegt bei 25 bis 280 bar, vorzugsweise bei 30 bis 250, besonders bevorzugt bei 50 bis 220 bar.

Gegebenenfalls verwendet man zusätzlich noch ein Inertgas wie beispiels weise Stickstoff oder Argon, bevorzugt Stickstoff.

Die Reaktion kann beispielsweise als Suspensions-, Riesel- oder Sumpfreaktion bei Temperaturen von 150 bis 300 °C und Gesamtdrücken von 20 bis 400 bar, vorzugsweise bei Temperaturen von 150 bis

220 °C und Drücken von 60 bis 250 bar durchgeführt werden. Es empfiehlt sich, gegenenfalls die Diole II in einem inerten Lösungsmittel gelöst zu verwenden, wobei pro g II zwischen 0,10 und 200 ml, vorzugsweise 0,25 bis 50 ml eines inerten Lösungsmittels in aller Regel genügen.

Als inerte Lösungsmittel eignen sich Ether wie Diethylether, Methyl-isopropylether, Methyl-tert.-butylether, Tetrahydrofuran und Dioxan; aliphatische Kohlenwasserstoffe wie n-Pentan, das Pentanisomerengemisch, n-Hexan, das Hexanisomerengemisch, Petrolether und Cyclohexan, aromatische Kohlenwasserstoffe wie Benzol, Toluol, die Xylole, Amide wie N-Methylpyrrolidon, Dimethylformamid, Dimethylacetamid und deren Isomerengemische oder Mischungen dieser Lösungsmittel.

Als Hydrierungs- Dehydrierungskatalysatoren eignen sich Metalle, beispielsweise Nickel, Cobalt, Kupfer und Chrom in feinverteilter, aktiver Form sowie Gemische dieser Metalle, gegebenenfalls auf üblichen Trägermaterialien.

Geeignete Hydrier- Dehydrierkatalysatoren sind in Houben-Weyl, Methoden der Organischen Chemie, Band 11 1, Seite 126-131 angegeben. Bevorzugt werden Festbettkatalysatoren mit Trägermaterial. Besonders bevorzugt werden die in der DE-A-19 53 263 genannten Katalysatoren.

Geeignete Trägermaterialien sind z.B. Bimsstein, Diatomeenerde, Kieselgel, Thorium- oder Aluminiumoxid, die man z.B. durch Tränken mit entsprechenden Metallsalzlösungen sowie nachfolgender Reduktion mit Wasserstoff, enthält.

Als Festbettkatalysatoren können beispielsweise Strangpresslinge mit einem Durchmesser von 2 bis 8 mm und einer Länge bis zu 15 mm; Tabletten in Zylinderform von 5 mm Durchmesser und 5 mm Höhe oder Kugeln mit Durchmessern von 2 bis 10 mm eingesetzt werden.

Bei der Rieselfahrweise wird das Reaktionsgemisch beispielsweise mit einer Geschwindigkeit von 200 bis 1500 ml pro Liter Katalysatorvolumen und Stunde gefahren.

Nach der Umsetzung werden die entstandenen Produkte durch übliche Verfahren, z.B. durch Abdestillieren von Ammoniak und Wasser aus dem Reaktionsgemisch isoliert; nichtumgesetzte Ausgangsstoffe werden gegebenenfalls in die Umsetzung zurückgeführt. Wasserstoff und andere gasförmige Anteile können ebenfalls in den Reaktor zurückgeführt werden.

Die Verbindungen I eignen sich als Vorprodukte zur Herstellung von Elastomeren oder können als Zwischenprodukte für andere Polymere wie z.B. Epoxidharze eingesetzt werden.

## Beispiele

### Beispiel 1

Zur Herstellung einer Verbindung I mit einem Durchschnittsmolgewicht 1310 wurde als Ausgangsstoff eine Verbindung II mit einem Durchschnittsmolgewicht 640 verwendet.

Als Reaktor diente ein beheizbares Stahlrohr mit 30 mm Innendurchmesser, 500 ml Katalysator wurden als Festbett eingefüllt. Der Katalysator bestand aus einem Gemisch von Nickel, Cobalt und Kupfer auf $Al_2O_3$-Träger, wie in DE-A-19 53 263, Beispiel 1 angegeben, und war bei 300 °C mit Wasserstoff vorbehandelt. Zur Aminierung wurden stündlich 100 g einer Verbindung I mit einem Durchschnittsmolgewicht von 640, 250 ml flüssiges $NH_3$ und 50 Nl Wasserstoff dem Reaktor zugeführt. Die Reaktionstemperatur wurde auf 210 °C, der Druck auf 250 bar einreguliert. Das den Reaktor verlassende Gemisch gelangte nach Abkühlung in einen Abscheider und wurde hier in Gas-und Flüssigkphase kontinuierlich getrennt. Aus der flüssigen Phase wurden danach Ammoniak und Wasser durch Abdestillieren entfernt.

Das so erhaltene Produkt war bei 20 °C eine wachsartige Masse, bei 30 °C eine viskose Flüssigkeit. Das Durchschnittsmolgewicht, Dampfdruckosometrisch bestimmt, lag bei 1310. Die Gesamt-Aminzahl betrug 127, die sekundär-Aminzahl 41, die OH-Zahl 0 bis 1 (jeweils mg KOH-Äquivalente pro g Substanz). Durch NMR-Spektroskopie wurden die Strukturen $-O-C_4H_8-$, $-C_4H_8-NH_2$ und $-C_4H_8-NH-C_4H_8-$ bestätigt..

### Beispiel 2

Zur Herstellung einer Verbindung I mit einem Durchschnittsmolgewicht von 4000 wurde als Ausgangsstoff eine Verbindung II mit einem Durchschnittsmolgewicht von 2000 verwendet.

Die Reaktion wurde analog Beispiel 1 durchgeführt, jedoch wurden stündlich 50 g der Verbindung II, die in 39 g Cyclohexan gelöst waren, sowie 133 ml flüssiges $NH_3$ und 25 NL Wasserstoff zugeführt. Nach Abdestillieren von Ammoniak, Cyclohexan und Wasser aus dem Reaktionsgemisch lag ein wachsartiges

Produkt vor mit folgenden Kennzahlen:
Gesamt-Aminzahl = 44, sekundär-Aminzahl = 13,
tertiär-Aminzahl = 1, OH-Zahl = 0,7.

Aus der Formel I errechnet sich mit X = 26,5 und Y = 1 die Gesamt-Aminzahl = 42 und die sek.-Aminzahl = 14.

## Ansprüche

1. Amino-mono- oder -di[(poly-n-butoxy)-n-butylamino]-(poly-n-butoxy)-n-butylamine der allgemeinen Formel I
$H_2N\text{-}[(CH_2CH_2CH_2CH_2O)_x\text{-}(CH_2)_4\text{-}NH]_y\text{-}(CH_2CH_2CH_2CH_2O)_x\text{-}(CH_2)_4\text{-}NH_2$ (I),
in der x 1 bis 150 und y 1 oder 2 bedeuten.

2. Verfahren zur Herstellung von Amino-mono- oder -di[(poly-n-butoxy)-n-butylamino]-(poly-n-butoxy)-n-butylaminen der allgemeinen Formel I
$H_2N\text{-}[(CH_2CH_2CH_2CH_2O)_x\text{-}(CH_2)_4\text{-}NH]_y\text{-}(CH_2CH_2CH_2CH_2O)_x\text{-}(CH_2)_4\text{-}NH_2$ (I),
in der x 1 bis 150 und y 1 oder 2 bedeuten, dadurch gekennzeichnet, daß man Hydroxy-(poly-n-butoxy)-butanole der allgemeinen Formel II
$HO\text{-}(CH_2CH_2CH_2CH_2O)_x\text{-}(CH_2)_4\text{-}OH$ (II),
in der x 1 bis 150 bedeutet, mit 1,01 bis 300 Moläquivalenten Ammoniak pro Hydroxygruppe in Gegenwart eines Hydrier-Dehydrierkatalysators und Wasserstoff bei Temperaturen von 150 bis 300 °C und Drücken von 20 bis 400 bar umsetzt.

3. Mischung,enthaltend Amino-mono- oder -di[(poly-n-butoxy)-n-butylamin]-(poly-n-butoxy)-n-butylamine der allgemeinen Formel I
$H_2N\text{-}[(CH_2CH_2CH_2CH_2O)_x\text{-}(CH_2)_4\text{-}NH]_y\text{-}(CH_2CH_2CH_2CH_2O)_x\text{-}(CH_2)_4\text{-}NH_2$ (I),
in der x 1 bis 150 und y 1 oder 2 bedeuten, dadurch gekennzeichnet, daß man Hydroxy-(poly-n-butoxy)-butanole der allgemeinen Formel II
$HO\text{-}(CH_2CH_2CH_2CH_2O)_x\text{-}(CH_2)_4\text{-}OH$ (II),
in der x 1 bis 150 bedeutet, mit 1,01 bis 300 Moläquivalenten Ammoniak pro Hydroxygruppe in Gegenwart eines Hydrier-Dehydrierkatalysators und Wasserstoff bei Temperaturen von 150 bis 300 °C und Drücken von 20 bis 400 bar umsetzt.